# EUROPÄISCHE PATENTSCHRIFT

(11) **EP 0 702 159 B1**
(45) Veröffentlichungstag und Bekanntmachung des Hinweises auf die Patenterteilung: **19.11.1997**
(21) Anmeldenummer: 95810478.8
(22) Anmeldetag: 24.07.1995
(51) Int. Cl.: F16B 19/14, F16B 15/00

(54) **Pulverkraft Nagel mit stauchbarer Hülse**
Shooting nail with a compressible sleeve
Clou projectile muni d'une douille compressible

(30) Priorität: 15.09.1994 DE 4432783
(43) Veröffentlichungstag der Anmeldung: 20.03.1996
(73) Patentinhaber: HILTI Aktiengesellschaft, 9494 Schaan (LI)
(72) Erfinder: Janssen, Rupert, A-6812 Meiningen (AT); Guillon, Luc, CH-9468 Sax (CH); Fröwis, Markus, A-6820 Frastanz (AT)
(74) Vertreter: Wildi, Roland

(56) Entgegenhaltungen:
- AU-B- 486 273
- BE-A- 693 785
- DE-A- 1 625 367
- DE-C- 4 327 436

## Beschreibung

Die Erfindung betrifft ein Befestigungselement mit dem Eintreiben in harte Aufnahmematerialien mittels pulverkraftbetriebener Setzgeräte dienendem Nagel und Vorspannelement, wobei der Nagel in Eintreibrichtung anschliessend an einen Schaft eine Spitze aufweist und zumindest diese Spitze vom Vorspannelement, das ein Hülsenteil und ein in Eintreibrichtung daran anschliessendes, flanschartiges Auflageteil aufweist, umgeben ist.

Befestigungselemente der genannten Art, welche unter Verwendung pulverkraftbetriebener Setzgeräte verwendbar sind, kommen bevorzugt für Serienanwendungen zum Einsatz. Hierbei geht es insbesondere darum, Teile wie Kabelkanäle, Kabelbriden, Kabelschellen, Isolierplatten, Abhängungen oder dergleichen zu befestigen. Die Befestigung dieser Teile erfolgt an harten Aufnahmematerialien wie Beton, Mauerwerk, Gestein, Stahl oder dergleichen.

Die Festlegung der genannten Befestigungselemente erfolgt in der Weise, dass mittels der Verwendung findenden pulverkraftbetriebenen Setzgeräte ein Nagel, Bolzen oder derartiges Element, in das harte Aufnahmematerial eingetrieben wird. Dieser Nagel ist von einem Vorspannelement umgeben, welches sich auf dem Aufnahmematerial oder dem zu befestigenden Teil abstützt. Ein Lastangriffsmittel am Nagel kommt nach erfolgter Festlegung in Kontakt mit dem Vorspannelement, wobei es sich bei diesem Lastangriffsmittel um einen Kopf, einen Bund, eine Gewindemutter oder dergleichen handeln kann.

Die hier zur Diskussion stehenden zu befestigenden Teile bestehen zumeist aus Kunststoff, einerseits aus Gründen der Wirtschaftlichkeit und andererseits in bestimmten Fälle auch aus Gründen der Isolation. Die Verwendung von Kunststoff als Material für die zu befestigenden Teile schafft in Verbindung mit der hier in Rede stehenden Art der Befestigung unter Verwendung pulverkraftbetriebener Setzgeräte gewisse Probleme. So muss gewährleistet sein, dass das zu befestigende Teil ausreichend gegen das Aufnahmematerial gespannt wird. Dies bedingt eine definierte Setztiefe des Nagels, so dass einerseits nicht die Gefahr einer unzureichenden Spannung oder andererseits nicht die Gefahr einer Zerstörung der zu befestigenden Teile besteht.

Bei Verwendung pulverkraftbetriebener Setzgeräte ist es schwierig, eine exakte Setztiefe des Nagels einzuhalten. Dies einerseits aufgrund der meistens vorhandenen Inhomogenität des Aufnahmematerials und andererseits aufgrund der Schwankungen in der Energieabgabe der Verwendung findenden Treibladungen. Dringt der Nagel zuwenig tief ein, wird das zu befestigende Teil nicht ausreichend gegen das Aufnahmematerial gespannt. Dringt jedoch der Nagel zu tief in das Aufnahmematerial ein, besteht die Gefahr einer Zerstörung des zu befestigenden Teiles.

Zur Vermeidung einer Zerstörung spröder Materialien ist aus der DE-C- 16 25 367 ein Befestigungselement bekannt, welches einen Nagel und ein Vorspannelement umfasst. Das Vorspannelement weist eintreibrichtungsseitig ein flanschartiges Auflageteil und daran anschliessend entgegen der Eintreibrichtung ein Hülsenteil auf. Weiter ist aus der AU-B-486 273 ein Befestigungselement nach dem Oberbegriff des Anspruchs 1 bekannt.

Bei diesen bekannten Befestigungselementen ist die eintreibrichtungsseitige Stirnfläche des flanschartigen Auflageteiles nur um ein begrenztes Mass grösser als die Querschnittsfläche des Nagels. Dies führt dazu, dass während des Eintreibvorganges eine erhebliche spezifische Flächenpressung auf das Aufnahmematerial wirkt, was zur Folge hat, dass bei spröden Aufnahmematerialien Ausplatzungen entstehen, welche einerseits sich negativ auf die Befestigungsqualität auswirken und andererseits zu einer negativen optischen Wirkung führen. Darüber hinaus besteht eine erhebliche Verkantungsgefahr beim Aufsetzen des pulverkraftbetriebenen Seztgerätes, so dass es zu einem schrägen Eindringen des Nagels kommen kann. Zudem bedingt die Bolzenführung des Verwendung findenden pulverkraftbetriebenen Setzgerätes einen aufwendigen Aufbau, um die Führung des Nagels während des Eintreibvorganges sicherzustellen.

Der Erfindung liegt die Aufgabe zugrunde, ein Befestigungselement zu schaffen, mit dem Verkantungen und Ausplatzungen im Aufnahmematerial vermieden werden und zudem eine Vereinfachung und Verbesserung der Führung im Zusammenwirken mit dem Verwendung findenden pulverkraftbetriebenen Setzgerät erzielt wird.

Erfindungsgemäss wird die Aufgabe dadurch gelöst, dass das Vorspannelement des Befestigungselementes teilweise von einem Kunststoffteil umgeben ist, das eine plan zur eintreibrichtungsseitigen Stirnfläche des flanschartigen Auflageteiles verlaufende Auflagefläche und eine im wesentlichen dem Aussendurchmesser des flanschartigen Auflageteiles entsprechende, entgegen der Eintreibrichtung offene Ausnehmung aufweist.

Das erfindungsgemäss vorgesehene Vorspannelement schafft insgesamt eine grosse Stirnfläche des Befestigungselementes, welche sich aus eintreibrichtungsseitiger Stirnfläche des Auflageteiles und Auflagefläche des Kunststoffteiles zusammensetzt. Damit wird beim Eintreibvorgang die spezifische Flächenpressung aufgrund dieser sich addierenden Flächen ganz wesentlich herabgesetzt. Ausplatzungen im Aufnahmematerial werden dadurch vermieden. Zudem wird die Verkantungsgefahr beim Aufsetzen des pulverkraftbetriebenen Setzgerätes ganz wesentlich herabgesetzt, so dass ein senkrechtes Eintreiben des Nagels in das Aufnahmematerial gewährleistet ist.

Die entgegen der Eintreibrichtung hin offene Ausnehmung ermöglicht ein Eintauchen der Bolzenführung des Verwendung findenden pulverkraftbetriebenen Setzgerätes. Dadurch ist die Bolzenführung aussen geführt, so dass insgesamt zwischen Befestigungselement und Bolzenführung eine derart ausreichende Führung entsteht, dass auf Führungsmittel in Form von zusätzlichen Metallrondellen am Nagel verzichtet werden kann. Für die Führung reicht damit allenfalls das Lastangriffsmittel in Form eines Kopfes am Nagel aus, welcher in Verbindung mit der Bohrung der Bolzenführung tritt.

Bevorzugte Flächenverhältnisse, welche zur Vermeidung von Ausplatzungen und Verkantungen beitragen, ergeben sich zweckmässigerweise dann, wenn die Auflagefläche des Kunststoffteiles dem 3- bis 8-fachen der eintreibrichtungsseitigen Stirnfläche des flanschartigen Auflageteiles entspricht.

Um eine ausreichende Führung der Bolzenführung des Verwendung findenden pulverkraftbetriebenen Setzgerätes in der Ausnehmung des Kunststoffteiles zu gewährleisten, ist vorzugsweise die offene Ausnehmung zumindest teilweise von zylinderförmigen Wandungsteilen gebildet.

Um ein ausreichendes Eintauchen der Bolzenführung zu gewährleisten und ein eventuelles Abgleiten zu vermeiden, entspricht zweckmässigerweise die axiale Höhe der Wandungsteile dem 0,2 - bis 0,4-fachen des Durchmessers der Ausnehmung.

Die Verbindung zwischen Vorspannelement und Kunststoffteil erfolgt in einfacher Weise im Rahmen eines Spritzvorganges, indem beispielsweise das Vorspannelement, welches aus einem Metall besteht, der Spritzform für das Kunststoffteil beigegeben wird. Diese Verbindung kann insbesondere in axialer Richtung durch Formschluss verbessert werden, indem vorzugsweise das flanschartige Auflageteil einen in Eintreibrichtung stufenweise abnehmenden Aussendurchmesser aufweist.

Wie bereits darauf hingewiesen, werden die in Rede stehenden Befestigungselemente auch in Verbindung mit Kabelschellen verwendet. Insbesondere in Verbindung mit Kabelschellen und ähnlichen, beispielsweise schellenartigen Elementen bietet sich gemäss einer weiteren Ausführungsform der Erfindung die Möglichkeit einer einstückigen Lösung an, indem das Kunststoffteil vom Fuss der Kabelschelle gebildet ist. Auch in einem solchen Fall kann die Verbindung zwischen Vorspannelement und Fuss der Kabelschelle in einem Spritzvorgang erfolgen, wobei wiederum der Aussendurchmesser des flanschartigen Auflageteiles zur formschlüssigen Verbindung stufenweise ausgebildet sein kann. Der grosse Vorteil eines derartig ausgebildeten Befestigungselementes besteht in einem äusserst einfachen Montagevorgang, was insbesondere bei Serienbefestigungen der hier in Rede stehenden Art von ausschlaggebender Bedeutung ist.

Die Ausnehmung für die Führung der Bolzenführung des Verwendung findenden pulverkraftbetriebenen Setzgerätes ist somit in den Fuss der Kabelschelle eingelassen. Um diesen Fuss aus Gründen der Materialersparnis nicht zu dick werden zu lassen, können zweckmässigerweise Wandungsteile der Ausnehmung zumindest teilweise von Rippen gebildet sein, die einen Teil des Fusses bilden. Solche Rippen können gleichmässig am Umfang verteilt sein, so dass sich eine ausreichende Führung der Bolzenführung einstellt.

Die Erfindung wird nachstehend anhand von Zeichnungen beispielhaft erläutert. Es zeigen:
- Fig. 1: ein Befestigungselement gemäss Erfindung mit Vorspannelement und Teilen eines pulverkraftbetriebenen Setzgerätes in eintreibfertigem Zustand;
- Fig. 2: eine Draufsicht auf das Vorspannelement der Fig. 1;
- Fig. 3: das Befestigungselement der Fig. 1 in eingetriebenem Zustand, in Verbindung mit einem Kabelkanal;
- Fig. 4: ein Befestigungselement in Form einer Kabelschelle;
- Fig. 5: eine Draufsicht auf das Befestigungselement der Fig. 4.

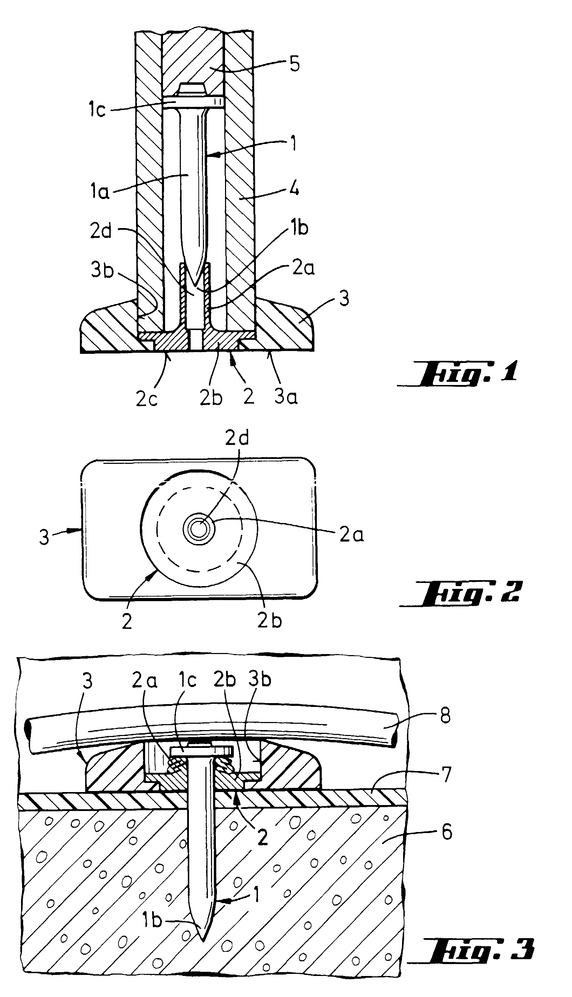

Das Befestigungselement der Figuren 1 bis 3 besteht aus einem Nagel 1 und einem Vorspannelement 2. Der Nagel 1 besitzt einen Schaft 1a, an den sich in Eintreibrichtung eine Spitze 1b und entgegen der Eintreibrichtung ein Lastangriffsmittel in Form eines Kopfes 1c anschliesst.

Das Vorspannelement 2 weist ein Hülsenteil 2a und in Eintreibrichtung daran anschliessend ein flanschartiges Auflageteil 2b auf. Das Vorspannelement 2 ist ferner teilweise von einem Kunststoffteil 3 umgeben, wobei sich die eintreibrichtungsseitige Stirnfläche 2c des flanschartigen Auflageteiles 2b und die Auflagefläche 3a des Kunststoffteiles 3 zu einer planen Stirnfläche ergänzen. Zur in axialer Richtung formschlüssigen Verbindung zwischen Vorspannelement 2 und Kunststoffteil 3 ist ein gestufter Aussendurchmesser am flanschartigen Auflageteil 2b vorgesehen.

Die Figur 1 zeigt das Befestigungselement in eintreibfertigem Zustand. Dabei ragt die Spitze 1b des Nagels 1 in eine Aufnahmebohrung 2d des Vorspannelementes 2. Wie die Figur 1 ferner zeigt, weist das Kunststoffteil 3 eine entgegen der Eintreibrichtung offene Ausnehmung 3b auf. Der Durchmesser dieser Ausnehmung 3b entspricht im wesentlichen dem grössten Aussendurchmesser des Vorspannelementes 2.

Die Ausnehmung 3b im Kunststoffteil 3 dient der Aufnahme einer Bolzenführung 4 des Verwendung findenden pulverkraftbetriebenen Setzgerätes, wie dies ebenfalls aus Figur 1 ersichtlich ist. Damit ist während des Eintreibvorganges, der durch Beaufschlagung des Nagelkopfes 1c mittels eines andeutungsweise dargestellten Kolbens 5 des Verwendung findenden pulverkraftbetriebenen Setzgerätes erfolgt, eine ausreichende Führung gegeben.

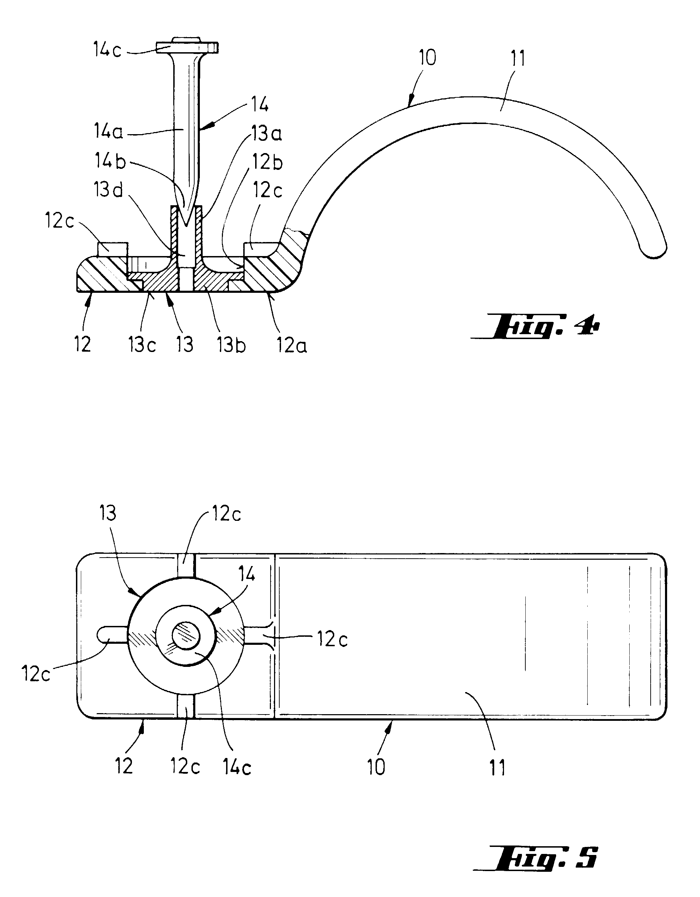

Während die Figur 2 eine Draufsicht auf das vom Kunststoffteil 3 umgebene Vorspannelement 2 zeigt, stellt Figur 3 ein Befestigungsbeispiel dar. In diesem Befestigungsbeispiel ist mittels des erfindungsgemässen Befestigungselementes an einem Aufnahmematerial 6 ein andeutungsweise dargestellter Kabelkanal 7 befestigt worden. Während des Eintreibvorganges mittels eines Verwendung findenden pulverkraftbetriebenen Setzgerätes ist der Nagel 1 in das Aufnahmematerial 6 eingetrieben worden, wobei das Vorspannelement 2, das heisst insbesondere das Hülsenteil 2a gestaucht worden ist. Durch diese Stauchung sind Inhomogenitäten des Aufnahmematerials 6 sowie Schwankungen in der Energieabgabe der Verwendung findenden Treibladungen ausgeglichen worden. Die Figur 3 verdeutlicht, wie der Kopf 1c des Nagels 1 innerhalb der Ausnehmung 3b so weit versenkt wurde, dass keine störenden Konturen das Kunststoffteil 3 axial überragen. Dies ist insbesondere von Bedeutung, wenn - wie im gezeigten Beispiel - ein Kabel 8 auf das Befestigungselement zu liegen kommt. Somit ist es ausgeschlossen, dass das Kabel 8 durch vorstehende Metallteile beschädigt wird.

Die Figuren 4 und 5 zeigen in beispielhafter Form eine Weiterbildung des erfindungsgemässen Befestigungselementes in Form einer Kabelschelle 10. Diese Kabelschelle 10 besteht aus einem Haltebügel 11 und einem ein Kunststoffteil 12 bildenden Fuss. Das Kunststoffteil 12 umgibt wie im vorangegangenen Beispiel ein Vorspannelement 13, welches sich aus einem flanschartigen Auflageteil 13b und einem entgegen der Eintreibrichtung daran anschliessenden Hülsenteil 13a zusammensetzt. Die eintreibrichtungsseitige Stirnfläche 13c des flanschartigen Auflageteiles 13b und die Auflagefläche 12a des Kunststoffteiles 12 ergänzen sich zu einer planen Stirnfläche.

Ein Nagel 14 ist in eintreibfertigem Zustand in die Bohrung 13d des Hülsenteiles 13a eingesetzt, wobei der Nagel 14 einen Schaft 14a mit sich in Eintreibrichtung anschliessender Spitze 14b und sich entgegen der Eintreibrichtung anschliessenden Kopf 14c aufweist.

Zur Aufnahme einer in diesem Beispiel nicht dargestellten Bolzenführung des Verwendung findenden pulverkraftbetriebenen Setzgerätes ist im Kunststoffteil 12 eine entgegen der Eintreibrichtung offene Ausnehmung 12b vorgesehen. Diese Ausnehmung 12b ist - wie insbesondere Figur 5 zeigt - von Rippen 12c umstanden, welche Wandungsteile der Ausnehmung 12b bilden und somit ebenfalls der Führung der nicht dargestellten Bolzenführung des Verwendung findenden pulverkraftbetriebenen Setzgerätes dienen. Die Anordnung, Ausbildung und Anzahl solcher Rippen 12c stellt nur ein Beispiel dar und kann beliebig variiert werden.

Zur Erzielung einer in axialer Richtung wirkenden formschlüssigen Verbindung zwischen Vorspannelement 13 und dem als Fuss der Kabelschelle 10 ausgebildeten Kunststoffteil 12 kann wiederum ein stufenweise abnehmender Aussendurchmesser am flanschartigen Auflageteil 13b vorgesehen sein, wie dies Figur 4 zeigt.

Auch beim Beispiel entsprechend den Figuren 4 und 5 bietet sich wie beim vorangegangenen Beispiel als Material für das Vorspannelement 13 Metall, beispielsweise Stahl an. Die Verformbarkeit des Verwendung findenden Metalls kann auf den jeweiligen Anwendungsfall abgestimmt werden, das heisst es sind insbesondere die Beschaffenheit des Aufnahmematerials sowie die Streubreite der Verwendung findenden Treibladungen zu beachten.

## Patentansprüche

1. Befestigungselement mit einem dem Eintreiben in harte Aufnahmematerialien (6) mittels pulverkraftbetriebener Setzgeräte dienendem Nagel (1,14), einem Vorspannelement (2, 13), das ein Hülsenteil (2a, 13a) und ein in Eintreibrichtung daran anschliessendes flanschartiges Auflageteil (2b, 13b) aufweist, und einem weiteren dem Vorspannelement (2,13) teilweise umgebenden Teil wobei der Nagel (1, 14) in Eintreibrichtung anschliessend an einen Schaft (1a, 14a) eine Spitze (1b, 14b) aufweist und zumindest diese Spitze (1b, 14b) vom Vorspannelement (2, 13), umgeben ist, **dadurch gekennzeichnet,** dass das weitere Teil ein Kunststoffteil (3, 12) ist, das eine plan zur eintreibrichtungsseitigen Stirnfläche (2c, 13c) des flanschartigen Auflageteiles (2b, 13b) verlaufende Auflagefläche (3a, 12a) und eine im wesentlichen dem Aussendurchmesser des flanschartigen Auflageteiles (2b, 13b) entsprechende, entgegen der Eintreibrichtung offene Ausnehmung (3b, 12b) aufweist.

2. Befestigungselement nach Anspruch 1, dadurch gekennzeichnet, dass die Auflagefläche (3a, 12a) des Kunststoffteiles (3, 12) dem 3- bis 8-fachen der eintreibrichtungsseitigen Stirnfläche (2c, 13c) des flanschartigen Auflageteiles (2b, 13b) entspricht.

3. Befestigungselement nach Anspruch 1 oder 2, dadurch gekennzeichnet, dass die offene Ausnehmung (3b, 12b) zumindest teilweise von zylinderförmigen Wandungsteilen gebildet ist.

4. Befestigungselement nach Anspruch 3, dadurch gekennzeichnet, dass die axiale Höhe der Wandungsteile dem 0,2- bis 0,4-fachen Durchmesser der Ausnehmung (3b, 12b) entspricht.

5. Befestigungselement nach einem der Ansprüche 1 bis 4, dadurch gekennzeichnet, dass das flanschartige Auflageteil (2b, 13b) einen in Eintreibrichtung stufenweise abnehmenden Aussendurchmesser aufweist.

6. Befestigungselement nach einem der Ansprüche 1 bis 5, dadurch gekennzeichnet, dass das Kunststoffteil (12) vom Fuss einer Kabelschelle (10) gebildet ist.

7. Befestigungselement nach Anspruch 6, dadurch gekennzeichnet, dass die Wandungsteile der Ausnehmung (12b) zumindest teilweise von Rippen (12c) gebildet sind.

## Claims

1. A fixing element having a nail (1, 14) employed for driving into hard receiver materials (6) by means of placement devices operated by explosive powder forces, and having a leader element (2, 13) which has a sleeve part (2a, 13a) and a flange-like supporting part (2b, 13b) following the latter in the direction of driving-in, and a further part which partially surrounds the leader element (2, 13), wherein the nail (1, 14) has a point (1b, 14b) following a shank (1a, 14a) in the direction of driving-in, and at least this point (1b, 14b) is surrounded by the leader element (2, 13), **characterised in that** the further part is a plastics part (3, 12) which comprises a supporting face (3a, 12a) extending level with the end face (2c, 13c) on the driving-in side of the flange-like supporting part (2b, 13b), and a recess (3b, 12b) which is open opposite to the direction of driving-in and which substantially corresponds to the outside diameter of the flange-like supporting part (2b, 13b).

2. A fixing element according to claim 1, characterised in that the supporting face (3a, 12a) of the plastics part (3, 12) corresponds to 3- to 8-times the end face (2c, 13c) on the driving-in side of the flange-like supporting part (2b, 13b).

3. A fixing element according to claim 1 or 2, characterised in that the open recess (3b, 12b) is at least partly formed from cylindrical wall parts.

4. A fixing element according to claim 3, characterised in that the axial height of the wall parts corresponds to 0.2 to 0.4 times the diameter of the recess (3b, 12b).

5. A fixing element according to any one of claims 1 to 4, characterised in that the flange-like supporting part (2b, 13b) has an outside diameter which decreases in steps iii the directioii of driving-in.

6. A fixing element according to any one of claims 1 to 5, characterised in that the plastics part (12) is formed from the base of a cable clip (10).

7. A fixing element according to claim 6, characterised in that the wall parts of the recess (12b) are at least partly formed from ribs (12c).

## Revendications

1. Elément de fixation, comprenant un clou (1, 14) servant à l'enfoncement dans des matériaux de réception (6) durs au moyen d'appareils de scellement actionnés par l'énergie de la poudre, un élément de précontrainte (2, 13) comportant un élément de douille (2a, 13a) et un élément d'appui (2b, 13b) en forme de bride qui y fait suite dans la direction de pose, et un autre élément enveloppant partiellement l'élément de précontrainte (2, 13), le clou (1, 14) présentant dans la direction de pose, à la suite d'une tige (la, 14a), une pointe (1b, 14b) et au moins cette pointe (1b, 14b) étant entourée par l'élément de précontrainte (2, 13), **caractérisé en ce** que l'autre élément est un élément en matière plastique (3, 12) qui comporte une surface d'appui (3a, 12a) alignée avec la surface frontale (2c, 13c) de l'élément d'appui (2b, 13b) en forme de bride, et un évidement (3b, 12b) ouvert dans le sens opposé à la direction de pose et correspondant sensiblement au diamètre extérieur de l'élément d'appui (2b, 13b) en forme de bride.

2. Elément de fixation selon la revendication 1, caractérisé en ce que la surface d'appui (3a, 12a) de l'élément en matière plastique (3, 12) correspond à 3 à 8 fois la surface frontale (2c, 13c) de l'élément d'appui (2b, 13b) en forme de bride, orientée dans la direction de pose.

3. Elément de fixation selon la revendication 1 ou 2, caractérisé en ce que l'évidement (3b, 12b) ouvert est formé au moins en partie par des éléments de paroi cylindriques.

4. Elément de fixation selon la revendication 3, caractérisé en ce que la hauteur axiale des éléments de paroi correspond à 0,2 à 0,4 fois le diamètre de l'évidement (3b, 12b).

5. Elément de fixation selon l'une des revendications 1 à 4, caractérisé en ce que l'élément d'appui (2b, 13b) en forme de bride présente un diamètre extérieur qui diminue par degrés dans la direction de pose.

6. Elément de fixation selon l'une des revendications 1 à 5, caractérisé en ce que l'élément en matière plastique (12) est formé par le pied d'un serre-câble (10).

7. Elément de fixation selon la revendication 6, caractérisé en ce que les éléments de paroi de l'évidement (12b) sont formés au moins en partie par des nervures (12c).
